# EUROPÄISCHE PATENTSCHRIFT

(11) **EP 0 622 395 B1**
(45) Veröffentlichungstag und Bekanntmachung des Hinweises auf die Patenterteilung: **25.09.1996**
(21) Anmeldenummer: 94105593.1
(22) Anmeldetag: 12.04.1994
(51) Int. Cl.: C08G 69/28

(54) **Diskontinuierliches katalytisches Verfahren zur Herstellung von Polyamid-6.6**
Discontinuous catalytic process for the production of polyamide-6,6
Procédé discontinu et catalytique pour la production de polyamide-6.6

(30) Priorität: 26.04.1993 DE 4313587; 04.02.1994 DE 4403452
(43) Veröffentlichungstag der Anmeldung: 02.11.1994
(73) Patentinhaber: Zimmer Aktiengesellschaft, D-60388 Frankfurt (DE)
(72) Erfinder: Liehr, Hartmut, Dr., D-60388 Frankfurt (DE); Hofmann, Hans-Dieter, D-61184 Karben (DE)

(56) Entgegenhaltungen:
- EP-A- 0 000 142
- EP-A- 0 129 195
- EP-A- 0 315 408
- EP-A- 0 455 066
- EP-A- 0 475 087
- US-A- 3 193 535
- US-A- 3 501 441

## Beschreibung

Die Erfindung betrifft ein diskontinuierliches katalytisches Verfahren zur Herstellung von Polyamid-6.6 durch Aufheizen einer katalysatorhaltigen, 75 bis 85%igen, wäßrigen Lösung von Adipinsäure-Hexamethylendiamin-Salz bei steigendem Druck, Vorkondensation unter Verdampfen des Wassers bei konstantem Druck und Polykondensation bei bis auf Atmosphärendruck absinkendem Druck und einer Temperatur im Bereich von 260 bis 290 °C.

Bei der seit langem bekannten Herstellung von Polyamid-6.6 aus Adipinsäure-Hexamethylendiamin-Salz (AH-Salz) ergeben sich prinzipiell folgende Schwierigkeiten: Um die Ausgangsmonomere reaktionsbereit zu machen und das Reaktionsgemisch dünnflüssig zu halten, muß dem AH-Salz Wasser zugesetzt werden und der Reaktionsdruck so hoch sein, daß dieses Wasser bei Reaktionstemperatur in der Flüssigphase verbleibt. Wasser verhindert aber die Bildung von hochmolekularem Polyamid, so daß es vor der Polykondensation vollständig entfernt werden muß. Insbesondere die Diaminkomponente ist aber wasserdampfflüchtig. Aufwendige Vorkehrungen zur Verhinderung von Verunreinigungen im Abwasser und in der Luft sind daher erforderlich. Außerdem wird durch Austragen eines Teils der Diaminkomponente mit dem abdestillierten Wasser das stöchiometrische Verhältnis gestört, was zu einem Abbruch der Polykondensationsreaktion vor Erreichen des gewünschten, hohen Molekulargewichtes führt. Bei Ausgleich dieser Verluste durch einen anfänglichen Diamin-Überschuß entstehen vermehrt trifunktionelle Verbindungen, z. B. ω,ω'-Diaminodihexylamin (Dihexamethylentriamin), die als Vernetzer wirken und die Polymer-Qualität negativ beeinflussen, insbesondere beim Verspinnen und Verstrecken des Polyamids vermehrt zu Abrissen und Knötchen führen.

Um diesen Schwierigkeiten entgegenzuwirken, wird, ausgehend von einer 70 bis 85 %igen AH-Salz-Lösung, die Vorkondensation bei Drücken von mindestens 16 bis 19 bar und einer Endtemperatur von 265 bis 280 °C durchgeführt, wobei die Verweilzeit für Aufheizen und Vorkondensation bei über 200 min und die für die nachfolgende Polykondensation zusätzlich bei etwa 90 bis 135 min liegt (US-A 2 163 636, DE-B 1 570 283, EP-B 0 000 142). Dieser hohe Prozeßdruck setzt ein relativ teures Equipment voraus. Außerdem führen die hohe Vorkondensationstemperatur und die sehr langen Verweilzeiten zu nennenswerten Diamin-Verlusten und insbesondere zu vermehrter Triamin-Bildung einschließlich der negativen Auswirkungen auf die Polyamid-Qualität.

Es ist auch bekannt, die Vorkondensation unter Beibehaltung des hohen Druckes bei 240 bis 245 °C zu beenden, wobei für die anschließende Polykondensation über 100 min erforderlich sind. Bei dem entsprechenden Verfahren des US-A 3 407 179 wird die Reaktorwandung mit AH-Salz-Lösung besprüht, mit dem Nachteil einer Verunreinigung des Polyamids mit vernetztem Polyamid aus der jeweils vorangehenden Charge. Bei dem ebenfalls mit hohem Druck arbeitenden Verfahren des DE-A 2 117 623 wird während des Aufheizens und den ersten 2/3 der Vorkondensation flüchtiges Diamin durch Kondensation an einer Dephlegmatorspirale rückgeführt. Zur Erzielung einer Polyamid-Lösungsviskosität von 2,23 sind dennoch 180 min zuzüglich Aufheizdauer erforderlich.

Bei kontinuierlich betriebenen Röhrenreaktoren sind auch Prozeßdrücke von maximal 10 bar bekannt. Die zugehörigen Temperatur- und Verweilzeit-Bedingungen sind aber bei diskontinuierlich betriebenen Kesselautoklaven nicht realisierbar (EP-B 0 129 195 und 0 129 196).

Bei keinem dieser Verfahren werden Katalysatoren eingesetzt oder erwähnt. Bekannt sind Katalysatoren lediglich bei alternativen Verfahren, wie der Kondensation von Hexamethylendiamin mit Adipinsäurediamid bei Anfangsdrücken von beispielsweise 52 bar (US-A 4 543 407) oder der mindestens 28 h benötigenden Kondensation von festem AH-Salz in fester Phase (EP-B 0 455 066) oder der Nachkondensation im Extruder von Polyamid-6.6 mit einer anfänglichen relativen Viskosität von mindestens 2,5 (DE-C 3 605 202). Die hierbei verwendeten und im Polyamid verbleibenden Katalysator-Mengen liegen bei über 0,01 Gew.-%, wobei die verschiedenen phosphorhaltigen Säuren, deren Alkalisalze und deren organische Ester keinerlei Unterschied in der katalytischen Wirkung aufweisen. Derart hohe Katalysator-Konzentrationen im Polyamid-6.6 führen jedoch zu verstärktem thermischen Abbau während Lagerung, Verarbeitung und Gebrauch des Polyamids.

Es besteht daher weiterhin Bedarf an einem diskontinuierlichen Verfahren zur Herstellung von Polyamid-6.6, welches bei Minimierung der Verweilzeit, der Diamin-Verluste und der Triamin-Bildung mit niedrigerem Druck und daher mit weniger teurem Equipment auskommt als die bekannten Verfahren.

Aufgabe der vorliegenden Erfindung ist daher, ein diskontinuierliches Verfahren zur Herstellung von möglichst thermostabilem Polyamid-6.6 aus wäßriger Adipinsäure-Hexamethylendiamin-Salz-Lösung zur Verfügung zu stellen, welches sowohl eine Minimierung der Diamin-Verluste und der Triamin-Bildung als auch die Verwendung von kostengünstigem Equipment ermöglicht.

Diese Aufgabe wird erfindungsgemäß entsprechend den Angaben der Patentansprüche gelöst.

Das neue Verfahren geht von 75 bis 85 %igen wäßrigen Lösungen von Adipinsäure und Hexamethylendiamin aus, wobei Dicarbonsäure und Diamin im wesentlichen in äquivalenten Mengen als Neutralsalz (AH-Salz) vorliegen. Die Herstellung derartiger Lösungen erfolgt in bekannter Weise. Zur Modifizierung der Polyamid-Eigenschaften können geringe Mengen bis etwa 3 Gew.-% anderer Monomere, wie Caprolactam, mitverwendet werden. Der Zusatz üblicher Kettenregler ist möglich.

Dieser wässrigen AH-Salz-Lösung wird erfindungsgemäß als Katalysator eine durch Dissoziation HPO₃²⁻-Ionen bildende Verbindung, vorzugsweise Phosphonsäure (H₃PO₃) oder Alkalimetallphosphonate (Me₂HPO₃), besonders bevorzugt Dinatriumphosphonat (Na₂HPO₃ · 5H₂O) in einer 0,001 bis 0,008 Gew.-%, vorzugsweise 0,002 bis 0,005 Gew.-% Phosphor entsprechenden Menge, bezogen auf festes AH-Salz, zugesetzt. Überraschenderweise erwiesen sich HPO₃²⁻-Ionen bildende Verbindungen, wie Phosphonsäure und Dinatriumphosphonat, bei der vorliegenden Verfahrensweise anderen bekannten phosphorhaltigen Katalysatoren deutlich überlegen, so daß bereits mit geringeren Konzentrationen als die der erwähnten, alternativen Verfahren eine wesentliche Verkürzung der Vor- und Polykondensationsdauer erreicht wird. Diese Verweilzeitreduzierung erlaubt nicht nur eine Minderung der Produktionskosten sondern führt auch zu einer Verringerung der Diamin-Verluste und der Triamin-Bildung sowie zu einer Thermobeständigkeit, die der von katalysatorfreiem Polyamid gleichkommt.

Die katalysatorhaltige AH-Salz-Lösung wird im wesentlichen bei Ausschluß von Sauerstoff (< 3 ppm O₂) in einem geschlossenen System unter autogenem Druck erhitzt und anschließend unter Verdampfen des eingebrachten und gebildeten Wassers vorkondensiert. Erfindungsgemäß wird die Lösung oberhalb von 175 °C mit einer Rate im Bereich von 0,5 bis 3,0 °C/min bis zum Erreichen eines Druckes im Bereich von 7 bis 10 bar absolut, bevorzugt 8 bis 9 bar, besonders bevorzugt etwa 8 bar, erhitzt. Überraschend wurde festgestellt, daß diese Heizrate einer Aufheizdauer entspricht, die sowohl für eine Reduzierung der Hexamethylendiamin-Verluste in der nachfolgenden Abdampfphase als auch für die Verhinderung der Triamin-Bildung günstig ist. Ein ebensolches Aufheizen zwischen 165 ⁰C und 175 °C ist empfehlenswert, unterhalb von 165 °C aber ohne nennenswerten Einfluß auf das weitere Verfahren. Danach wird unter Beibehaltung des Druckes das Wasser (AH-Salz-Lösungswasser plus Kondensationswasser) mit einer Verdampfungsrate von mindestens 2 %/min, bevorzugt mindestens 3 %/min, wobei die % auf die Wassermenge der AH-Salz-Lösung bezogen sind, abgetrieben.

Nachdem das mit der AH-Salz-Lösung eingebrachte Wasser und das durch die Kondensationsreaktion entstandene Wasser im wesentlichen abgedampft wurden, was bei einer Temperatur der Reaktionsmasse im Bereich von 235 bis 260 °C, vorzugsweise 245 bis 255 °C der Fall ist, wird unter Absenken des Prozeßdruckes auf 1 bar oder weniger unter gleichzeitiger Steigerung der Temperatur bis auf einen Wert im Bereich von 260 bis 290 °C in der Schmelzphase in an sich bekannter Weise polykondensiert. Bereits nach bemerkenswert kurzen Polykondensationszeiten wird hochmolekulares Polyamid-6.6 erhalten. Für Polyamid-6.6 mit einer relativen Viskosität im Bereich von 2,2 bis etwa 3,0 (gemessen bei 25 °C an einer 1%igen Polyamid-Lösung in 96%iger Schwefelsäure), beträgt die Gesamtverweilzeit für Aufheizen ab 175 °C, Vorkondensation und Polykondensation maximal 90 min und für eine relative Viskosität im Bereich von etwa 3,0 bis 3,5 maximal 100 min.

Das in üblicher Weise aus dem Reaktor ausgetragene und granulierte Polyamid-6.6 eignet sich hervorragend zur Herstellung von Fasern sowie von Folien und Formkörpern. Bekannte Zusätze wie Mattierungsmittel, Farbstoffe und Stabilisatoren können dem Reaktionsgemisch zu jedem beliebigen Zeitpunkt zugesetzt werden.

Sofern für spezielle Anwendungen Polyamid mit einer höheren relativen Viskosität, beispielsweise etwa 3,2 bis 4,2, benötigt wird, kann das erhaltene Polyamid-6.6 nach der Granulierung in bekannterweise einer Festphase-Polykondensation bei 165 bis 190 °C unter Vakuum oder in Gegenwart eines sich inert verhaltenden Gas-Stromes, insbesondere Stickstoff oder Kohlendioxid oder Gemische hiervon, unterworfen werden.

Überraschend wurde festgestellt, daß es für die Realisierung einer hohen Raum-Zeit-Ausbeute, die die Wirtschaftlichkeit des Verfahrens maßgeblich bestimmt, weniger darauf ankommt in der Prekondensationsphase durch hohe Temperaturen in Verbindung mit hohem Druck eine hohe Reaktionsgeschwindigkeit einzustellen, sondern vielmehr alle Bedingungen zu erfüllen, die es gestatten, das zu Reaktionsbeginn eingebrachte Lösungswasser mit Hilfe eines niedrigen Prozeßdruckes sowie mit Hilfe einer großen Heizfläche und eines hohen Temperaturunterschiedes zwischen Heiz- und Produktmedium, d. h. durch eine hohe Verdampfungsrate bei niedriger Produkttemperatur rasch aus dem Reaktionssystem zu entfernen. Mit dieser Verfahrensweise gelingt es durch die rasche Konzentrationserhöhung der Monomeren in der Reaktionslösung die Prekondensation frühzeitig auszulösen und einen entsprechenden Reaktionsfortschritt zu erreichen sowie das Reaktionsgemisch flüssig zu halten. Dabei wird die kritische Prozeßphase, in welcher freies Diamin ausgedampft werden kann, rasch überfahren. Außerdem gelingt es durch den bis zu einer Produkttemperatur von etwa 190 °C erreichten Umsatz, die Konzentration an freiem Hexamethylendiamin durch Einbau in die Molekülkette so zu reduzieren, daß die erst zu diesem Zeitpunkt verstärkt einsetzende Dihexamethylentriamin-Bildung auf ein Minimum beschränkt bleibt. Der Triamin-Gehalt, bezogen auf Polyamid-6.6, liegt deutlich unterhalb der Nachweisgrenze von etwa 100 ppm.

Die gegenüber dem Stand der Technik verkürzte Verweilzeit ermöglicht eine deutliche Reduzierung des Prozeßdruckes und daher eine Verbilligung des Equipments, ohne nennenswerte Erhöhung der Diamin-Verluste. Es konnte festgestellt werden, daß die Diamin-Verluste der Verweilzeit direkt proportional und dem Prozeßdruck umgekehrt proportional sind. Somit werden die bei niedrigerem Prozeßdruck theoretisch höheren Diamin-Verluste durch die verkürzte Verweilzeit kompensiert, vorausgesetzt dem Reaktionsgemisch wird eine angemessene Verweilzeit während der Aufheizphase (ab 175 °C) eingeräumt. Bei Einhaltung der erfindungsgemäßen Aufheiz- und Verdampfungsraten ist es möglich, die Reaktionsmasse in diskontinuierlich betriebenen Kesselautoklaven schmelzflüssig zu halten, ohne den Prozeßdruck, wie bisher angenommen, auf mindestens 16 bar einstellen zu müssen.

Eine weitere Verkürzung der Verweilzeit, insbesondere der Polykondensationsphase, wird durch den Zusatz geringer Mengen HPO₃²⁻-Ionen bildender Verbindungen erreicht. Dies führt, ebenso wie die niedrigen Vorkondensationstemperaturen, zu einer bemerkenswert niedrigen Konzentration an zwangsweise bei den zur Polykondensation erforderlichen hohen Temperaturen auftretenden thermolytischen Abbauprodukten, insbesondere Carbonyl- und Imino-Verbindungen. Als Maßstab hierfür und zusätzlich als Indikator für Mikrogele gilt die an einer 2 Gew.-%igen Polyamid-Lösung in destillierter Ameisensäure bei 287 nm und einer Schichtdicke von 5,0 cm gemessene UV-Transmission, wobei die Werte umso niedriger sind, je mehr Abbauprodukte vorhanden sind. Das erfindungsgemäße Polyamid-6.6 hat eine UV-Transmission von mindestens 85 %, vorzugsweise mindestens 88 % nach der Schmelzepolykondensation und von mindestens 70 % nach einer anschließenden Festphasepolykondensation. Diese Werte liegen deutlich über denen handelsüblicher Produkte, mit beispielsweise 70 % bzw. 40 % nach der Festphasepolykondensation.

### Ausführungsbeispiel 1:

In einem mit Stickstoff inertisierten und über einen Heizmantel mit flüssigem Diphyl von 275 °C vorgeheizten 200-1-Reaktor (ohne Dephlegmator und ohne Rektifikationskolonne) werden 88 kg einer 85,2 %igen wäßrigen Lösung von Adipinsäure-Hexamethylendiamin-Salz, welche 7,5 g Na₂HPO₃ · 5H₂O enthält und ihrerseits auf 175 °C vorgeheizt war, eindosiert. Innerhalb von 10 min wurde die Reaktionslösung mit nunmehr 320 °C heißem Diphyl auf ca. 200 °C und einem Druck von 10 bar absolut aufgeheizt (Aufheizrate 2,5 °C/min). Nach Erreichen des Prozeßdruckes von 10 bar wurden innerhalb von 34 min 19 1 Wasser abgedampft (Verdampfungsrate 4,3 %/min). Am Ende der Vorkondensationsphase war die Produkttemperatur auf 255 °C gestiegen. Innerhalb von 20 min wurde danach der Reaktor auf Atmosphärendruck entspannt und gleichzeitig das Reaktionsprodukt auf 280 °C erhitzt. Nach weiteren 16 min bei 280 °C hatte das Polyamid-6.6 eine relative Viskosität von 2,59 und wurde unter 6 bar Stickstoff-Druck nach insgesamt 80 min (ab Aufheizen) aus dem Reaktor ausgedrückt sowie unter Wasser granuliert. Das Produkt hatte einen nach ASTM E-313 ermittelten Weißgrad (whiteness index) von 81,1, einen nach ASTM D-1925 ermittelten Gelbgrad (yellowness index) von + 4,5, eine UV-Transmission (2 Gew.-% Polyamid in Ameisensäure, Schichtdicke 5,0 cm) bei 287 nm von 89,8 % und einen Triamin-Gehalt deutlich unterhalb der Nachweisgrenze von 100 ppm (bezogen auf Polyamid). Der Hexamethylendiamin-Gehalt des abgedampften Wassers betrug 0,81 Gew.-%.

Die mit 4500 m/min zu einem Spinntiter von 53 dtex versponnenen Kapillarfäden zeigten über 16 Stunden keine Fadenbrüche. Die Festigkeit der Kapillarfäden lag mit 40 bis 41 cN/tex im Niveau führender Markenprodukte.

Ein Teil des granulierten Polyamids wurde der Festphasenpolykondensation bei 175 °C in Gegenwart von Stickstoff unterworfen. Nach 300 min betrug die relative Viskosität 3,7 und die UV-Transmission bei 287 nm 70,0 %.

### Ausführungsbeispiel 2:

Die Ausführung entspricht dem Ausführungsbeispiel 1, jedoch mit folgenden Abweichungen:

Die AH-Salz-Lösung enthält, bezogen auf Phosphor, die dreifache Menge Katalysator, nämlich 8,8 g H₃PO₃, 97%ig. Das Aufheizen der Lösung von 175 °C auf etwa 190 °C und 8 bar absolut erfolgt innerhalb von 25 min mit einer Aufheizrate von 0,6 °C/min und das Verdampfen des Wassers innerhalb von 32 min mit einer Verdampfungsrate von 4,6 %/min. Danach beginnt bei einer Produkttemperatur von 245 °C die Entspannungsphase, die nach 20 min bei 0,6 bar absolut und 280 °C beendet ist. Nach weiteren 3 min bzw. nach insgesamt 80 min beträgt die relative Viskosität des erhaltenen Polyamid-6.6 2,9. Der Weißgrad beträgt 82,2, der Gelbgrad + 3,7, die UV-Transmission bei 287 nm 90,2 % und der Triamin-Gehalt deutlich weniger als die Nachweisgrenze von 100 ppm. Der Hexamethylendiamin-Gehalt des Wassers beträgt 0,59 Gew.-%. Die Festigkeit der durch Verspinnen erhaltenen Kapillarfäden liegt bei 45 bis 50 cN/tex. Fadenbrüche traten während des 16-stündigen Verspinnens nicht auf.

### Vergleichsbeispiel:

Die Ausführung erfolgt analog dem Ausführungsbeispiel 1, wobei die wässrige AH-Salz-Lösung aber an Stelle von Dinatriumphosphonat 23,0 g Triphenylphosphat enthält. Das Aufheizen von 175 °C auf ca. 200 °C und 10 bar (absolut) Druck erfolgt in 10 min und das nachfolgende Abdampfen von 19 l Wasser in 36 min. Die Polykondensation bis zu einer relativen Viskosität von 2,55 erfordert jedoch eine 2,3mal längere Verweilzeit, nämlich 37 min. Die Gesamtverweilzeit ab Aufheizen von 175 °C beträgt somit 103 min gegenüber 80 min bei erfindungsgemäßer Verwendung von Dinatriumphosphonat.

## Patentansprüche

1. Diskontinuierliches katalytisches Verfahren zur Herstellung von Polyamid-6.6 mit einer relativen Viskosität von mindestens 2,2 (gemessen bei 25 °C an einer 1 %igen Polyamid-Lösung in 96 %iger Schwefelsäure) durch Aufheizen einer 75 bis 85 %igen, wäßrigen Lösung von Adipinsäure-Hexamethylendiamin-Salz (AH-Salz) in einem geschlossenen System bei autogenem, ansteigendem Druck, Vorkondensation unter Verdampfen des Wassers bei konstantem Druck und Schmelze-Polykondensation bei bis auf 1 bar oder weniger absinkendem Druck und einer Temperatur im Bereich von 260 bis 290 °C sowie gegebenenfalls Festphase-Polykondensation, **dadurch gekennzeichnet,** daß die AH-Salz-Lösung eine HPO₃²⁻-Ionen bildende Verbindung in einer 0,001 bis 0,008 Gew.-% Phosphor entsprechenden Menge, bezogen auf festes AH-Salz, enthält und daß diese Lösung oberhalb von 175 °C mit einer Rate im Bereich von 0,5 bis 3,0 °C/min bis zum Erreichen des Vorkondensationsdruckes aufgeheizt wird, und die Vorkondensation bei einem Druck im Bereich von 7 bis 10 bar absolut, einer Endtemperatur im Bereich von 235 - 260 °C und einer Verdampfungsrate des Wassers von mindestens 2 %/min, wobei die % auf die Wassermenge der AH-Salz-Lösung bezogen sind, erfolgt.

2. Verfahren gemäß Anspruch 1, **dadurch gekennzeichnet,** daß bei einer relativen Viskosität des Polyamid-6.6 im Bereich von 2,2 bis etwa 3,0 die Gesamtverweilzeit für Aufheizen ab 175 °C, Vorkondensation und Schmelze-Polykondensation maximal 90 min beträgt.

3. Verfahren gemäß Anspruch 2, **dadurch gekennzeichnet**, daß das Polyamid-6.6 eine UV-Transmission bei 287 nm von mindestens 85 % (gemessen an einer 2%igen Polyamid-Lösung in Ameisensäure bei einer Schichtdicke von 5,0 cm) aufweist.

4. Verfahren gemäß einen der Ansprüche 1 bis 3, **dadurch gekennzeichnet,** daß die HPO₃²⁻-Ionen bildende Verbindung Phosphonsäure oder ein Alkalimetallphosphonat ist.

5. Verfahren gemäß Anspruch 4, **dadurch gekennzeichnet,** daß die HPO₃²⁻-Ionen bildende Verbindung Na₂HPO₃ . 5 H₂O ist.

6. Verfahren gemäß einem der Ansprüche 1 bis 5, **dadurch gekennzeichnet,** daß die Verdampfungsrate mindestens 3 %/min beträgt.

7. Verfahren gemäß einem der Ansprüche 1 bis 6, **dadurch gekennzeichnet,** daß der Vorkondensationsdruck 8 bis 9 bar absolut beträgt.

8. Verfahren gemäß einem der Ansprüche 1 bis 7, **dadurch gekennzeichnet,** daß das Polyamid-6.6 nach der Schmelze-Polykondensation granuliert wird und das Granulat einer Festphase-Polykondensation bei einer Temperatur im Bereich von 165 bis 190 °C unter Vakuum oder in Gegenwart eines sich inert verhaltenden Gas-Stromes unterworfen wird.

## Claims

1. Batch-wise, catalytic process for preparing polyamide-6,6 with a relative viscosity of at least 2.2 (measured at 25°C in a 1 % strength polyamide solution in 96 % strength sulphuric acid) by heating a 75 to 85 % strength, aqueous solution of hexamethylenediamine adipate (AH salt) in a sealed system under autogenic, increasing pressure, precondensation with evaporation of the water at constant pressure and melt polycondensation at a pressure falling to 1 bar or less and a temperature in the range 260 to 290°C and optionally solid phase polycondensation, **characterised in that** the AH salt solution contains a compound producing HP0₃²- ions in an amount corresponding to 0.001 to 0.008 wt.% of phosphorus, with respect to solid AH salt, and that this solution is heated above 175°C at a rate in the range 0.5 to 3.0 °C/min until the precondensation pressure is achieved, and precondensation is performed at a pressure in the range 7 to 10 bar absolute, with a final temperature in the range 235 - 260°C and with a rate of evaporation of water of at least 2 %/min, wherein the % is with reference to the amount of water in the AH salt solution.

2. A process according to Claim 1, **characterised in that**, with a relative viscosity of polyamide-6,6 in the range 2.2 to about 3.0, the total residence time for heating from 175°C, precondensation and melt polycondensation is a maximum of 90 min.

3. A process according to Claim 2, **characterised in that** the polyamide-6,6 has a UV transmission at 287 nm of at least 85 % (measured in a 2 % strength polyamide solution in formic acid with a path length of 5.0 cm).

4. A process according to one of Claims 1 to 3,
**characterised in that** the compound producing HP0₃²- ions is phosphonic acid or an alkali metal phosphonate.

5. A process according to Claim 4, **characterised in that** the compound producing HPO₃²- ions is Na₂HPO₃.5H₂O.

6. A process according to one of Claims 1 to 5,
**characterised in that** the rate of evaporation is at least 3 %/min.

7. A process according to one of Claims 1 to 6,
**characterised in that** the precondensation pressure is 8 to 9 bar absolute.

8. A process according to one of Claims 1 to 7,
**characterised in that** the polyamide-6,6 is granulated after melt polycondensation and the granular material is subjected to solid phase polycondensation at a temperature in the range 165 to 190°C under vacuum or in the presence of an intert stream of gas.

## Revendications

1. Procédé catalytique discontinu pour la préparation de polyamide-6,6 présentant une viscosité relative d'au moins 2,2 (mesurée à 25°C sur une solution de polyamide à 1% dans de l'acide sulfurique à 96%) par chauffage d'une solution aqueuse de 75 à 85% de sel d'acide adipique-hexaméthylènediamine (sel AH) dans un système fermé sous pression autogène croissante, par précondensation avec évaporation de l'eau à pression constante et par polycondensation à l'état de fusion sous une pression décroissante jusqu'à 1 bar ou inférieure et à une température dans le domaine de 260 à 290°C ainsi qu'éventuellement par polycondensation en phase solide, caractérisé en ce que la solution de sel AH contient un composé formant des ions HPO₃²- dans une quantité correspondante de 0,001 à 0,008% en poids de phosphore, rapportés au sel solide AH et en ce qu'on chauffe cette solution au-delà de 175°C avec une vitesse dans le domaine de 0,5 à 3,0°C/min jusqu'à atteindre la pression de précondensation et la précondensation se fait à une pression dans le domaine de 7 à 10 bars absolus, à une température finale dans le domaine de 235-260°C et à une vitesse d'évaporation de l'eau d'au moins 2%/min, les pour-cent étant rapportés à la quantité d'eau de la solution de sel AH.

2. Procédé selon la revendication 1, caractérisé en ce que le temps de séjour total pour le chauffage à partir de 175°C, la précondensation et la polycondensation à l'état de fusion est au maximum de 90 min pour une viscosité relative du polyamide-6,6 dans le domaine de 2,2 à environ 3,0.

3. Procédé selon la revendication 2, caractérisé en ce que le polyamide-6,6 présente une transmission UV à 287 nm d'au moins 85% (mesurée sur une solution de polyamide à 2% dans de l'acide formique pour une épaisseur de couche de 5,0 cm).

4. Procédé selon l'une quelconque des revendications 1 à 3, caractérisé en ce que le composé formant des ions HPO₃²- est l'acide phosphonique ou un phosphonate de métal alcalin.

5. Procédé selon la revendication 4, caractérisé en ce que le composé formant des ions HPO₃²- est Na₂HPO₃.5H₂O.

6. Procédé selon l'une quelconque des revendications 1 à 5, caractérisé en ce que la vitesse d'évaporation est d'au moins 3%/min.

7. Procédé selon l'une quelconque des revendications 1 à 6, caractérisé en ce que la pression de précondensation est de 8 à 9 bars absolus.

8. Procédé selon l'une quelconque des revendications 1 à 7, caractérisé en ce qu'on granule le polyamide-6,6 après la polycondensation à l'état de fusion et en ce qu'on soumet le granulat à une polycondensation en phase solide à une température dans le domaine de 165 à 190°C sous vide ou en présence d'un courant gazeux se comportant de manière inerte.
